(19) Europäisches Patentamt
European Patent Office
Office européen des brevets

(11) **EP 1 794 918 B1**

(12) **FASCICULE DE BREVET EUROPEEN**

(45) Date de publication et mention
de la délivrance du brevet:
**06.02.2008 Bulletin 2008/06**

(51) Int Cl.:
***H04K 3/00*** *(2006.01)*

(21) Numéro de dépôt: **05802902.6**

(22) Date de dépôt: **26.09.2005**

(86) Numéro de dépôt international:
**PCT/FR2005/050779**

(87) Numéro de publication internationale:
**WO 2006/035178 (06.04.2006 Gazette 2006/14)**

(54) **DISPOSITIF ET PROCEDE DE COMMUNICATION SANS CONTACT SECURISEE**

SICHERE KONTAKTLOSE KOMMUNIKATIONSVORRICHTUNG UND VERFAHREN

SECURE CONTACTLESS COMMUNICATION DEVICE AND METHOD

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **27.09.2004 FR 0452171**

(43) Date de publication de la demande:
**13.06.2007 Bulletin 2007/24**

(73) Titulaire: **COMMISSARIAT A L'ENERGIE
ATOMIQUE**
**75015 Paris (FR)**

(72) Inventeurs:
• **DEHMAS, François**
**F-38240 Meylan (FR)**
• **CROCHON, Elisabeth**
**F-38320 Poisat (FR)**
• **VACHERAND, François**
**F-38800 Pont de Claix (FR)**

(74) Mandataire: **Poulin, Gérard et al
Brevatome
3, rue du Docteur Lancereaux
75008 Paris (FR)**

(56) Documents cités:
**DE-U1- 29 714 999          FR-A- 2 776 865
US-A- 5 955 969**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

**DOMAINE TECHNIQUE**

L'invention concerne un dispositif et un procédé de télétransmission en particulier pour objets portatifs (du type carte, billet, étiquette, etc.) liés par couplage, par exemple inductif, à une station fixe (du type lecteur de cartes, interrogateur d'étiquettes, etc.).

L'invention vise en particulier un dispositif comportant un émetteur et un récepteur entre lesquels une transmission sécurisée est assurée. Elle vise plus particulièrement mais non exclusivement le cas où l'émetteur est un émetteur d'une carte à puce et où le récepteur est un lecteur de cartes à puces.

Elle trouve des applications dans tous les domaines d'échanges de données sans contact, par couplage, par exemple selon une liste non limitative entre un objet portatif et une station fixe et, en particulier, dans le domaine de l'identification de choses ou d'objets, dans le domaine du contrôle d'accès, par exemple, à des services informatiques, ou dans le domaine du péage par carte.

**ÉTAT DE LA TECHNIQUE ANTÉRIEURE**

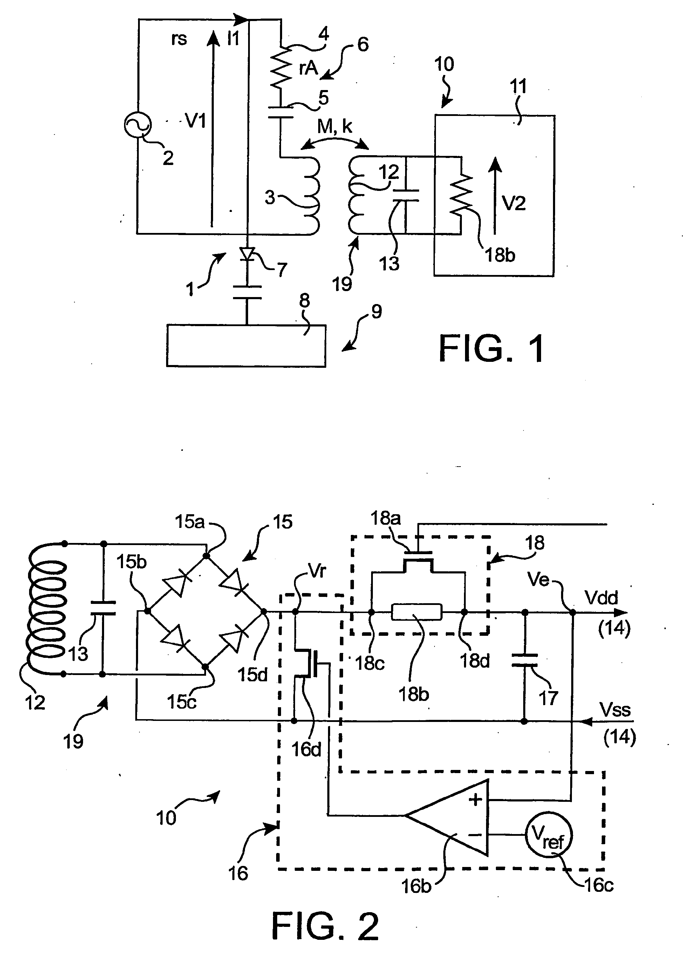

Le brevet FR 2 776 865 attribué au présent demandeur, révèle un système de communication entre un émetteur d'une carte et un récepteur représentés figure 1.

Un système d'échange de données comporte un récepteur 1, par exemple un lecteur de cartes et un ou plusieurs émetteurs 10 montés sur des objets portatifs. Le récepteur 1 comporte un générateur de fréquence 2, par exemple un oscillateur, couplé en série à une impédance de charge rA et un circuit accordé 6. Le circuit accordé 6 comporte en série une impédance capacitive 5, une impédance inductive 3. Un circuit de détection 9 qui inclut des moyens de détection représenté sous forme d'une diode 7 couplée par exemple capacitivement à des circuits d'amplification et de traitement 8, est couplé en parallèle au circuit accordé 6.

L'émetteur 10 de l'objet portatif comporte un ensemble de circuits électroniques 11 connecté aux bornes d'un circuit résonant 19 par exemple sous forme d'une capacité 13 connectée en parallèle à un bobinage inductif 12.

En fonctionnement l'émetteur 10 de l'objet portatif et le circuit récepteur 1 sont inductivement couplés l'un à l'autre par leur charge inductive respective, 3, 12.

L'émetteur 10 de l'objet portatif est par exemple télé alimenté à partir de la source 2. Ce cas se rencontre souvent pour les lecteurs de cartes.

Une variation du couplage est obtenue en faisant varier une impédance de charge 18b placée en série ou comme représenté figure 1 en parallèle au circuit résonnant 19. Les variations de l'impédance de charge 18b et donc du couplage sont détectées dans le récepteur 1. Ainsi une commande de la valeur de l'impédance de charge 18b, permet de transmettre des données de l'émetteur 10 au récepteur 1.

Un mode plus détaillé de réalisation de l'émetteur 10 de l'objet portable décrit dans le brevet précité est représenté sur la figure 2. Comme dans l'exemple de la figures 1, l'émetteur 10 de l'objet portable comporte un élément inductif formant antenne 12, par exemple un bobinage conducteur, aux bornes duquel est connectée une capacité 13, formant ainsi un circuit résonant 19. Un redresseur de tension 15 est monté en parallèle sur les bornes de l'antenne 12 pour assurer la transformation de la tension alternative reçue par l'antenne 12 en tension continue, transportée par une ligne d'alimentation Vdd vers des moyens de traitement et de mémorisation 14 non représentés.

Le redresseur 15 est un pont de GRÄETZ connecté aux deux bornes du bobinage 12 par des points de connexion 15a et 15c. Un point de connexion 15b du redresseur est connecté directement sur une ligne de sortie Vss de l'émetteur 10 de l'objet portable.

Un point de connexion 15d du redresseur 15 est connecté sur une entrée 18c d'un circuit modulateur 18. Le modulateur 18 comporte un dipôle électronique 18b monté en parallèle sur un transistor commutateur 18a. Cet ensemble commutateur 18a et dipôle 18b est monté en série sur la ligne d'alimentation Vdd, entre un point de sortie Vr du redresseur 15 et un point d'entrée Ve d'un amplificateur différentiel 16b. La tension portée au niveau de cette entrée Ve par rapport au point Vss est la tension régulée Vdd.

Le dipôle électronique 18b du modulateur 18 est choisi de façon à introduire une chute de tension Vr - Vdd entre les points 18c et 18d du modulateur 18, lorsque le transistor 18a est ouvert. Lorsque le transistor 18a est fermé, la chute de tension introduite par le modulateur 18 doit être plus faible et, de préférence, négligeable.

Dans la réalisation décrite ci-dessus, le dipôle électronique 18b est un élément de caractéristique courant-tension non linéaire, tel que la tension à ses bornes soit pratiquement constante, ce qui permet de maintenir une profondeur de modulation du coefficient de qualité de l'objet portatif à une valeur pratiquement constante.

Le dipôle électronique 18b peut être une résistance, ou une diode, ou bien une diode ZENER, ou encore un transistor dans lequel la grille est connectée sur le drain. Le dipôle électronique 18b peut aussi consister en une pluralité de diodes associées en séries. Les éléments 14-18 forment ensemble le circuit électronique 11 représenté sur la figure 1.

Il est connu de crypter numériquement la réponse de l'émetteur 10 au récepteur 1 au moyen d'une clef que le récepteur connaît et qui est utilisée pour décrypter le message crypté reçu.

Le cryptage des données envoyées par l'émetteur nécessite un certain nombre d'opérations à effectuer. Ce nombre peut être important comme dans le cas du cryptage RSA (Rivest, Shamir, Adleman). De plus certains algorithmes de cryptage nécessitent le stockage d'une clé qui peut être trouvée par un tiers grâce à une attaque DPA (Differential Power Analyis).

Le brevet US 5 955 969 décrit un système de communication comprenant un brouilleur de signaux afin d'éviter une communication prématurée entre un interrogateur et un transpondeur.

## EXPOSÉ DE L'INVENTION

L'invention a pour objet de proposer un procédé et un dispositif permettant de rendre plus difficile une détection du message envoyé par l'émetteur et reçu par le récepteur.

L'invention objet de la présente invention permet à l'émetteur de ne faire aucun calcul de cryptage et d'émettre en clair. Le coût et la taille de l'émetteur sont ainsi réduits puisqu'il n'est plus nécessaire de prévoir des moyens de stockage de clef et des moyens de cryptage. Il n'y a plus de risque de détection d'une clef par intrusion, ce qui pourrait compromettre la sécurité de la communication.

De plus, même si on enregistre une communication, la rejouer ultérieurement serait absolument inutile car le récepteur ne pourrait pas comprendre cette copie.

Lors d'une communication sans contact physique entre l'émetteur et le récepteur, un intrus peut intercepter les signaux échangés. Selon l'invention le récepteur brouille les signaux émis par l'émetteur afin que seul le récepteur puisse décoder les signaux reçus.

L'idée principale est que le récepteur va créer une perturbation brouillant les signaux émis par l'émetteur. Il pourra ensuite retrouver le signal envoyé par l'émetteur en éliminant, sur le signal reçu, les effets de la perturbation qu'il a créée.

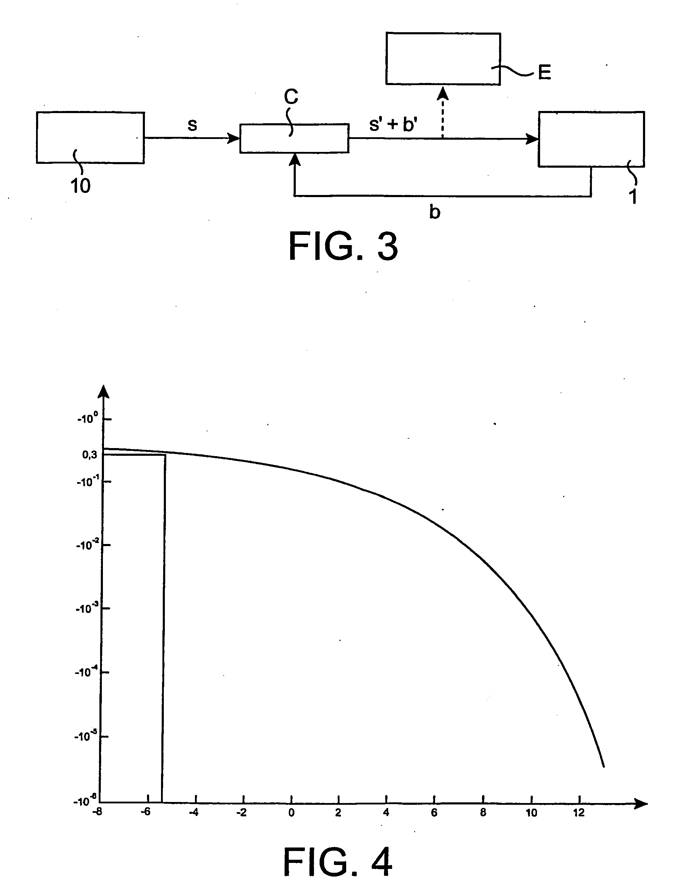

Le schéma de la figure 3 décrit le principe de base.

Sur la figure 3, on a matérialisé entre l'émetteur 10 et le récepteur 1 un canal C dans lequel transite un signal s, délivré par ledit émetteur 10 et un signal de bruit b émis par le récepteur. Le signal s est un signal de données obtenu par une modulation d'un paramètre d'une fréquence porteuse du signal s, par exemple l'amplitude, la fréquence ou la phase. Le bruit b brouille le signal s envoyé par l'émetteur. Le bruit de brouillage porte sur le même paramètre que celui dont la modulation est utilisé pour transmettre le signal s utile. Le canal C n'a pas d'existence physique, il s'agit de l'espace entre l'émetteur et le récepteur. Dans le cas d'un lecteur de carte, il s'agit du volume prévu dans le lecteur pour l'insertion de la carte au cours de l'échange de données entre la carte et le lecteur. Un espion éventuel E ne récupérerait qu'un signal s'+b', qui représente le signal transformé des signaux s et b, qui transite dans le canal C. Les signaux s' et b' sont différents de s et b car ils ont subi des transformations, comme par exemple un filtrage passe-bande dû aux antennes d'émission dans le cas d'ondes RF.

Le bruit émis par des moyens prévus à cet effet du récepteur a des caractéristiques telles qu'il est impossible de remonter, aux données émises objet du signal s, en ayant seulement connaissance du signal s'+b' se propageant entre l'émetteur et le récepteur dans le canal C.

Pour cela, le signal de bruit b a les caractéristiques suivantes :

Le signal de bruit b est indépendant des données transmises. Ainsi il est impossible à partir du signal s'+b' seul de remonter à s ou s'.

Sa bande spectrale recouvre celle du signal s émis par l'émetteur.

L'amplitude de la densité spectrale de puissance du bruit est supérieure à celle du signal dans la bande utile du signal s. La bande utile du signal s est le domaine de fréquence strictement nécessaire pour transmettre le signal. De la sorte il n'est pas possible de séparer le signal du bruit avec de simples filtres passe-bande. Pour cela, la puissance du bruit est telle que le signal se trouve noyé dans le bruit, c'est à dire que l'amplitude du bruit est si importante que l'on ne puisse plus en extraire le signal sans un taux d'erreur prédéterminé sur le signal extrait. Pour cela le rapport signal sur bruit S/B de la puissance Ps du signal s par rapport à la puissances Pb du signal de bruit est inférieur à un niveau prédéterminé. Il est préférable que le bruit ne soit pas reproductible donc en général il sera aléatoire.

En résumé l'invention est relative à un procédé de communication sécurisé entre un émetteur et un récepteur dans lequel une gamme de niveau de puissance émise par l'émetteur, une bande de fréquences à l'intérieur de laquelle l'émission a lieu, sont connues ou détectables par le récepteur, le procédé comportant

- l'émission par le récepteur d'un signal d'alimentation de l'émetteur,

caractérisé en ce que

le récepteur émet pendant au moins toute la durée de l'émission un signal de bruit indépendant des données transmises, ayant une bande spectrale qui recouvre la bande de fréquence à l'intérieur de laquelle l'émission a lieu, et ayant une puissance d'un niveau tel que le rapport entre le niveau du signal émis par l'émetteur et le niveau de la puissance émise par le récepteur est supérieur à une valeur prédéterminée,

le récepteur soustrait du signal reçu, le signal de bruit pour obtenir un signal utile.

L'invention est particulièrement adaptée au domaine de la transmission sans contact par exemple au cas où l'émetteur est une carte à puce et le récepteur est un lecteur de cartes à puces. Le lecteur produit un signal d'alimentation de la carte. La carte a une fréquence sous-porteuse d'émission qui est par convention connue du lecteur et qui est par exemple une fréquence divisée ou multiple entière de celle du circuit accordé du lecteur. En général la carte est introduite dans un volume de communication prévu dans le lecteur pour recevoir la carte. L'introduction de la carte modifie l'impédance rapportée dans les circuits du lecteur, en sorte que la détection de cette modification d'impédance constitue une information selon laquelle un signal va être émis.

De préférence le signal de bruit émis par le récepteur est obtenu par une modulation aléatoire du signal d'alimentation de l'émetteur par le récepteur, la modulation agissant sur le même paramètre physique, par exemple phase, fréquence, amplitude que celui modulé dans le signal émis.

Lorsque le signal d'émission est un signal numérique de période de bit connue au préalable, Il est avantageux de donner une nouvelle valeur aléatoire au paramètre modulé du signal de bruit, à chaque période de bit du signal émis et ceci de façon synchrone à ce signal. Ainsi, le tirage aléatoire de la valeur du paramètre choisi se fait de façon synchrone avec la période de bit du signal émis.. La modulation ayant un large spectre on est sûr que la bande spectrale du bruit de brouillage est plus large que la bande spectrale du signal d'émission, la densité de puissance étant plus forte au voisinage de la fréquence porteuse du signal d'émission.

De préférence le paramètre modulé est une variable aléatoire qui suit une loi gaussienne ou une loi uniforme de moyenne nulle. On évite ainsi de modifier la puissance électrique transmise par le récepteur à l'émetteur.

De préférence, le niveau de la puissance de bruit est déterminé en fonction d'une valeur prédéterminée pour obtenir en l'absence d'une connaissance du signal de bruit émis par le récepteur, ce qui est le cas d'un intrus qui tente de capter le signal, un taux d'erreur sur bit supérieur à une valeur prédéterminée. Lorsque le signal d'émission de l'émetteur comporte au moins une émission d'un bit de valeur connue à un instant connu, on utilise selon une variante avantageuse du procédé de l'invention, les instants d'émission des valeurs connues pour évaluer les déformations subies par les signaux au cours de l'émission/réception

Pendant les autres périodes de réception on calcul un signal de bruit réel en utilisant les déformations précédemment évaluées. Ce signal de bruit calculé est alors soustrait du signal reçu.

L'invention est également relative à un dispositif lecteur de cartes à puce comportant des moyens de génération d'un signal d'alimentation d'un émetteur de la carte, par exemple un oscillateur local, un volume de réception d'une carte permettant un couplage entre des circuits portés par la carte et des moyens d'émission/réception du lecteur couplés aux moyens de génération du signal d'alimentation caractérisé en ce que le récepteur comporte

des moyens de modulation du signal d'alimentation, modulant le signal d'alimentation

un générateur de signal aléatoire couplé auxdits moyens de modulation du signal d'alimentation

des moyens de traitement du signal présent sur les moyens d'émission/réception, ces moyens étant couplés au générateur de signal aléatoire, aux moyens d'émission/réception, et aux moyens de modulation et comportant

des moyens de soustraction couplés aux moyens d'antenne et aux moyens de modulation pour soustraire du signal présent sur les moyens d'émission/réception le signal de modulation, et des moyens de détection couplés aux moyens de soustraction pour détecter un signal utile.

Dans une variante de réalisation les moyens de traitement du signal présent sur les moyens d'émission/réception comporte des moyens de commutation permettant selon leur position de soustraire, comme indiqué ci-dessus, du signal présent sur les moyens d'émission/réception le signal de modulation, ou de soustraire du signal présent sur les moyens d'émission/réception, une image connue du signal utile.

## BRÈVE DESCRIPTION DES DESSINS

Des exemples de réalisation du procédé selon l'invention et de dispositifs aptes à réaliser le procédé seront maintenant décrits à l'aide des dessins annexés dans lesquels :

- la figure 1 déjà décrite est un exemple de réalisation d'un dispositif émetteur récepteur connu de l'art antérieur dans lequel la sécurité de communication peut être obtenue par cryptage par l'émetteur d'un signal de données émis,
- la figure 2 déjà décrite est un exemple de réalisation plus détaillé que celui de la figure 1 d'un émetteur connu de l'art antérieur,
- la figure 3 déjà décrite est un schéma destiné à expliquer le principe sur lequel repose l'invention,

La figure 4 représente une courbe théorique donnant une valeur moyenne du nombre de bits reçus faux par rapport au nombre de bits envoyés en fonction du rapport de la puissance du signal sur la puissance du bruit,

La figure 5 représente un schéma destiné à expliquer les transformations subies par le signal émis et par le bruit émis par le récepteur dans un canal de transmission entre un émetteur et ledit récepteur

La figure 6 représente un schéma sous forme de blocs fonctionnels d'un récepteur comportant des moyens de modulation d'une fréquence d'alimentation destinée à l'émetteur et des moyens de séparation du bruit du récepteur et d'un signal utile émis par l'émetteur.

Les figures 7a à 7d représentent des chronogrammes de signaux.

La figure 7a représente le signal utile s émis par un émetteur.

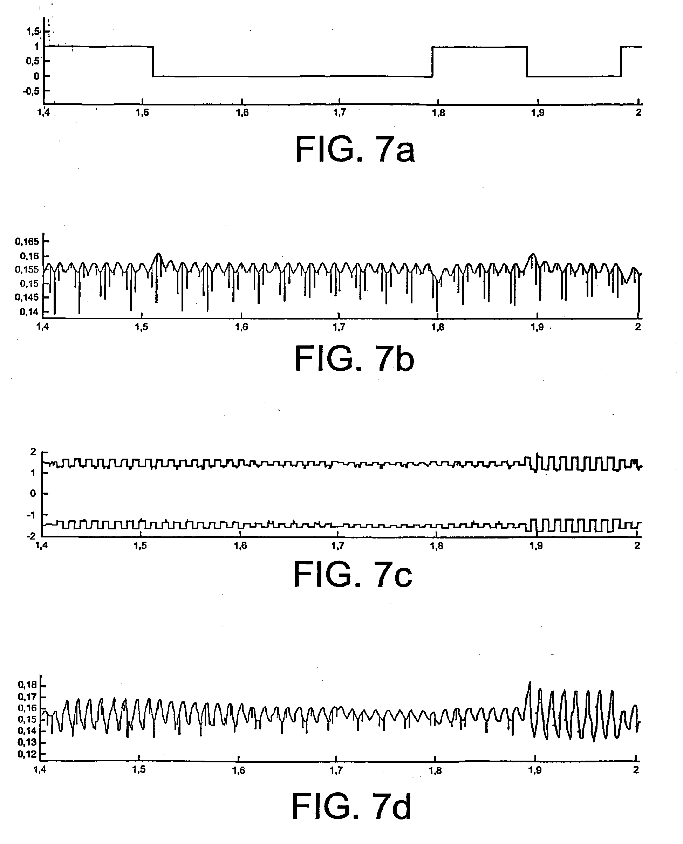

La figure 7b représente le courant dans l'antenne 3 du récepteur en l'absence de brouillage.

La figure 7c représente le bruit généré par un circuit de modulation du récepteur.

Enfin la figure 7d représente un courant dans une antenne du récepteur en présence du bruit et du signal utile.

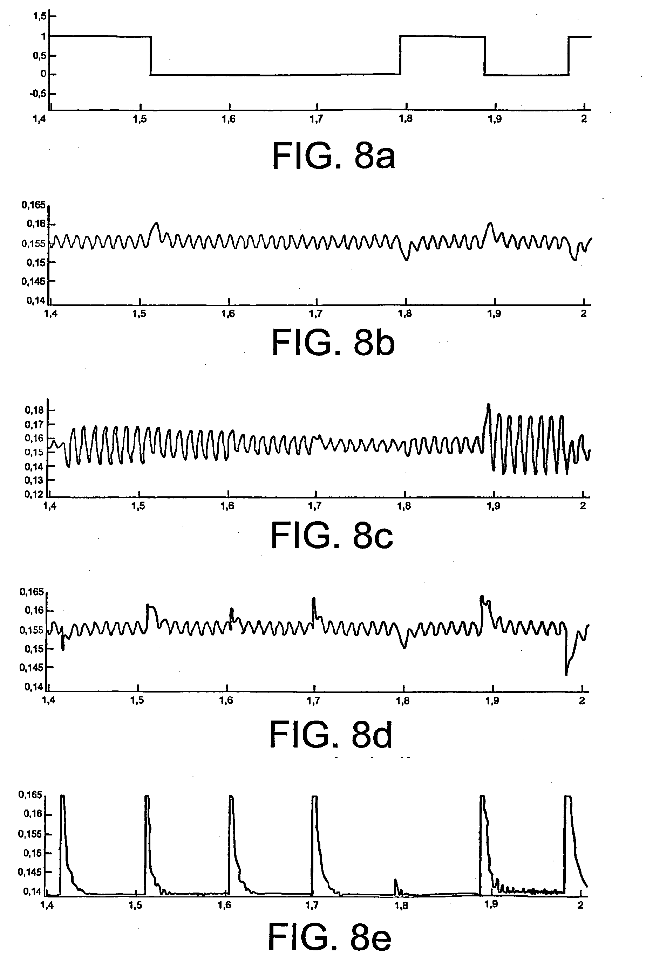

Les figures 8a à 8e représentent des chronogrammes des différents signaux présents lors du traitement du signal combiné bruit plus signal utile. Elle comporte les parties a à e.

La figure 8a représente le signal utile tel qu'émis par l'émetteur,

La figure 8b représente le courant présent dans l'antenne du lecteur en l'absence de bruit émis par le récepteur,

La figure 8c représente le courant présent dans l'antenne du lecteur en présence de bruit émis par le récepteur,

La figure 8d représente le signal présent dans des moyens de traitement du signal de l'antenne du récepteur après soustraction du bruit,

La figure 8e représente le signal de différence entre le signal non bruité représenté en partie d et le signal débruité, c'est-à-dire dont le bruit a été soustrait représenté en partie d.

Dans les dessins de l'art antérieur ou de l'invention des mêmes numéro de référence désignent des éléments ayant même fonction.

## EXPOSÉ DÉTAILLÉ DE MODES DE RÉALISATION PARTICULIERS

Un premier exemple de réalisation du procédé selon l'invention va maintenant être décrit pour le cas où la modulation du signal s émis par l'émetteur est une modulation par déplacement de phase bivalente (MDPB, en anglais BPSK, binary phase shift keying).

Soit $f_p$ la fréquence porteuse du signal s émis par l'émetteur,

Soit T la durée d'un bit ($f_p \gg 1/T$)

Soit V l'amplitude de la fréquence porteuse. La densité spectrale r($f$) de puissance du signal est alors :

$$\Gamma(f) = V^2 . T \frac{\sin c^2\big(\big[f - f_p\big].T\big) + \sin c^2\big(\big[f + f_p\big]T\big)}{4}$$

Dans cette formule sinc désigne un sinus cardinal selon la définition

$$\mathrm{Sinc}\ (x) = \mathrm{sinus\ cardinal}\ (x) = \frac{\sin \Pi se}{\Pi se}$$

La bande de fréquence utilisée par le signal a une largeur de 2/T et est centrée autour de $f_p$. Prenons un bruit b(t) de la forme :

$$b(t) = \sigma \sin(2\pi f_p t + \varphi) \sum_{k=-\infty}^{+\infty} b_k . \mathrm{Re}\, ct_T(t - kT)$$

avec

$$\text{Re}ct_T(t) = \begin{cases} 1 \text{ si } t \in [0,T] \\ 0 \text{ sinon} \end{cases}$$

$b_k$ variable aléatoire gaussienne de moyenne nulle et de variance unité.
σ constante d'ajustement du niveau du bruit.

Ce bruit correspond à l'ajout d'un bruit gaussien aux symboles en bande de base.

La dispersion spectrale de puissance (DSP) $\Gamma_b(f)$ de ce bruit est :

$$\Gamma_b(f) = \frac{\sigma^2 T}{4}(\sin c^2[(f - f_p)T] + \sin c^2[(f + f_p)T])$$

Le bruit correspond à une suite aléatoire d'amplitudes de modulation. Ce bruit ajouté au signal masque l'amplitude du signal émis.

On a donc la même DSP que pour le signal s sauf que *V* est remplacé par σ. La bande spectrale du bruit est donc bien la même que celle du signal.

Il reste à déterminer le coefficient σ minimum pour que le brouillage soit efficace.

La courbe théorique, en elle-même connue, donnant le nombre de bits reçus faux par rapport au nombre de bits envoyés (taux d'erreurs de bits ou TEB) en fonction du rapport signal à bruit $V^2/\sigma^2$ (rapport de la puissance du signal sur la puissance du bruit) est représenté figure 4. Les TEB sont portés en ordonnée et les valeurs de rapport signal/bruit en dB sont portés en abscisse. A partir de cette courbe, on déduit la puissance de bruit à envoyer pour obtenir le taux d'erreur souhaité.

Ainsi, si l'on souhaite que le taux d'erreur soit supérieur à 0,3 le rapport signal sur bruit doit être inférieur à -5,7 dB (puissance du bruit 3,7 fois supérieure à celle du signal). Donc si V=1 volt; σ doit être de

$$\sqrt{3,7} \approx 1,9 \text{ volts.}$$

De façon générale il est préférable que le niveau de la puissance de bruit soit déterminé en fonction d'une valeur prédéterminée pour obtenir en l'absence d'une connaissance du signal de bruit émis par le récepteur un taux d'erreur sur bit supérieur à une valeur prédéterminée.

Afin que le bruit soit non reproductible par deux récepteurs semblables, il est préférable qu'il soit aléatoire.

La génération du bruit est faite à l'aide d'un phénomène aléatoire, par exemple le bruit dans une fonction d'un transistor, afin d'empêcher la génération du même bruit par un tiers.

Il est évident alors que deux récepteurs de fabrication identique ne génèrent pas le même signal de bruit puisque ce bruit est, dans l'exemple, un bruit thermique. Cela signifie qu'il doit y avoir un vrai phénomène aléatoire, dépendant de l'extérieur, à la source de la génération du bruit.

Pour que le bruit soit imprévisible, et que le bruit à venir ne dépende pas uniquement du bruit passé il convient de ne pas utiliser des circuits logiques qui fournissent des phénomènes pseudo-aléatoires, mais plutôt des signaux d'origine physique comme le bruit thermique d'un transistor. En effet, suivant le protocole de communication utilisé, le signal s émis par l'émetteur peut être connu à certains moments, si le bruit à venir dépendait uniquement du bruit passé, alors on pourrait en déduire le bruit lors de ces périodes et par suite toute la chaîne de bruit.

Le mode d'élimination du bruit par le récepteur, afin de retrouver le signal s transmis est maintenant abordé.

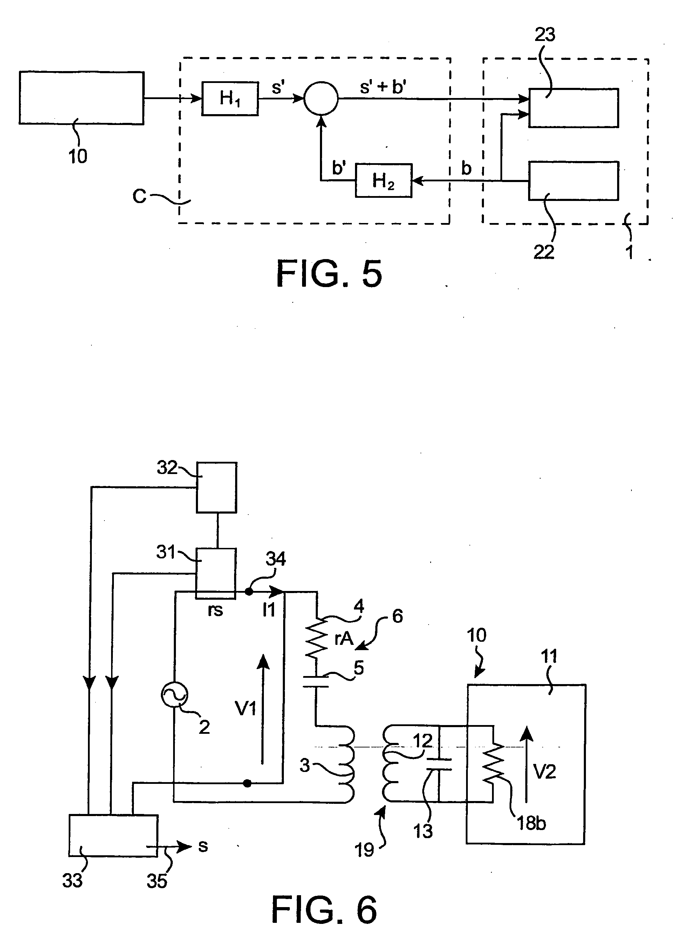

Entre son émission par le récepteur et sa réception par les circuits de détection du récepteur, le signal de bruit a subi divers convolutions dues à l'électronique et au canal C de transmission comme schématisé sur la figure 5. Cette figure représente schématiquement l'émetteur 10, le canal C et le récepteur 1. Le récepteur 1 comporte un émetteur 22 du bruit b et un récepteur 23 du bruit b' et du signal s' qui sont respectivement une transformée du bruit b par une convolution H2 dans le canal C et une transformée du signal s par une convolution H1 dans le canal C. Par mesure de simplification on a regroupé toutes les convolutions du bruit en une seule convolution H2 dans le canal.

Afin que le récepteur puisse éliminer b' connaissant b, il faut qu'il estime la convolution $H_2$. Cette estimation peut se faire, par exemple, lors d'une phase d'initialisation de la communication

La communication étant sans contact, le filtre $H_2$ peut évoluer au cours de la communication. Il convient donc de préférence de suivre l'évolution de ce filtre au cours de la communication.

Un mode matériel particulier de mise en oeuvre de l'invention va maintenant être décrit en référence à la figure 6. La figure 6 représente un schéma sous forme de blocs fonctionnels d'un système récepteur émetteur tel que celui représenté figure 1. Le récepteur est amélioré pour réaliser l'invention. Par rapport au circuit représenté figure 1, le circuit de détection 7-9 est remplacé par un module 33 de séparation du bruit b' et du signal utile s'. Le circuit comporte de plus un circuit de modulation 31 d'une fréquence d'alimentation destinée à l'émetteur, les moyens 33 de séparation du bruit du récepteur et d'un signal utile émis par l'émetteur et un générateur 32 de signal aléatoire. Les moyens 33 de séparation du bruit du récepteur et du signal utile émis par l'émetteur sont couplés d'une part au circuit de modulation 31 en sorte qu'il reçoive le signal de modulation produit par ce circuit 31 et d'autre part à un point 34 du circuit récepteur où est présent le signal émis par un émetteur 10 et reçu par couplage magnétique au niveau de l'antenne 3 du récepteur 1. Le signal porté par l'antenne 3 est représentatif d'une combinaison des signaux de bruit et de signal utile reçus par le récepteur 1.

Les moyens 33 de séparation du bruit du récepteur et du signal utile sont couplés au générateur 32 de signal aléatoire. Grâce à cette connexion une détection d'une variation de l'impédance du circuit accordé 6, dû à l'introduction d'une carte portant un circuit émetteur dans le récepteur 1 est détectée et transmise au générateur 32 de signal aléatoire. Le générateur 32 de signal aléatoire est couplé aux moyens 33 de séparation du bruit du récepteur et du signal utile.

Le fonctionnement est le suivant. Lorsqu'une carte portant un émetteur 10 est introduite dans un volume réservé à cet effet dans le lecteur 1, elle provoque une variation d'impédance du circuit accordé 6 qui est détectée par les moyens 33. cette détection provoque l'émission par les moyens 33 d'un signal d'activation du générateur de bruit aléatoire 32. Le bruit aléatoire produit par le générateur de bruit aléatoire 32 est reçu par le circuit de modulation 31 et est utilisé par ce circuit pour moduler la fréquence porteuse émise par le générateur de fréquence porteuse 2. Cette modulation peut prendre la forme, comme représenté figure 6 d'une modulation de la valeur d'une résistance rs chargeant le circuit résonnant 6 en addition à la charge rA 4. Ce cas correspond à une modulation d'amplitude. Dans le cas où le signal émis par l'émetteur 10 est modulé en phase, ou en fréquence, la sortie 34 du modulateur 31 est appliqué à un circuit modulateur de phase ou de fréquence respectivement. De tels circuits de modulation en phase ou en fréquence sont en eux-mêmes connus. Le bruit aléatoire est suffisant pour porter le rapport signal/bruit présent dans le canal C à un niveau suffisant pour noyer le signal utile comme expliqué plus haut. Les moyens 33 qui reçoivent séparément la modulation représentative du bruit en provenance du circuit de modulation 31 et le signal utile brouillé s' + b' présent sur l'antenne 3 séparent par exemple par soustraction, le bruit du signal utile et délivrent sur une sortie 35 le signal s utile.

Dans l'exemple représenté l'émetteur 10 est une carte sans contact télé-alimentée et le récepteur 1 est un lecteur en ondes RF dont la fréquence de réception est fc=13,56 MHz. Le but est de brouiller l'émission de l'émetteur 10 de la carte. Le système émetteur 10, récepteur 1 fonctionne de façon en elle-même connue selon le protocole défini par la norme ISO 14443 pour les cartes à puces sans contact de proximité:

On rappelle que selon cette norme

Le débit binaire le plus bas est de $\dfrac{f_c}{128}$ (~106 kbit/s).

L'émetteur 10 de la carte envoie de l'information au lecteur 1 par modulation de charge par exemple comme décrit plus haut en relation avec l'art antérieur représenté par la figure 2: le lecteur 1 envoie un signal à $f_c$=13,56 MHz non modulé. Ce signal est produit par l'antenne 3 qui reçoit le signal généré par le générateur de fréquence 2, par exemple un oscillateur 2. L'émetteur 10 de la carte génère une sous-porteuse de fréquence

$$f_s = \frac{f_c}{16} = 847,5 \ \text{kHz}$$ en modulant sa charge.

La sous-porteuse est modulée en BPSK:, un bit correspond à 8 périodes de sous-porteuse.

L'émetteur 10 de la carte commence son émission avec une sous-porteuse de phase $\Phi_0$ pendant une durée TR1. Cette phase $\Phi_0$ correspond à un « 1 ». La phase $\Phi_0$+180° correspond à un « 0 ».

Le bruit généré par le générateur 32 est tel qu'il empêche la détection de la phase de la sous-porteuse. On suppose que la modulation de la charge 18b de la carte 10, pour générer le signal utile s, va induire une modulation en amplitude. Cette modulation est induite par une variation de la résistance 18b représentée sur les figures 2 et 6. Le récepteur 1 module conformément à l'invention la porteuse à 13,56 MHz en amplitude par un signal carré de fréquence

$$f_s = \frac{f_c}{16} = 847,5 \ \text{kHz}$$ et d'amplitude aléatoire (amplitude pouvant prendre aussi des valeurs négatives). L'amplitude de cette sous-porteuse $f_s = \dfrac{f_c}{16}$ est tirée au sort à chaque bit émis par le générateur de signal aléatoire 32.

Ainsi le bruit généré occupe la même bande spectrale que le signal utile. Si on suppose que l'amplitude algébrique de la sous-porteuse suit une loi gaussienne, la variance de cette amplitude est choisie comme expliqué plus haut en liaison avec la figure 4 pour avoir un taux d'erreurs de bits de plus de 30%. La variance de l'indice de modulation, du bruit doit être supérieure à 3,7 fois le carré de l'indice de modulation du signal. On rappelle que l'indice de modulation du bruit est proportionnel à l'amplitude de la sous-porteuse pour une amplitude de porteuse donnée.

Des commentaires sur les résultats seront maintenant donnés en liaison avec la figure 7. Cette figure représente des chronogrammes de signaux. Elle comporte les parties a à d.

La partie a représente le signal utile s émis par la carte émetteur 10. Il s'agit d'un signal impulsionnel prenant les valeurs logiques 1 et 0.

La partie b représente le courant dans l'antenne 3 du récepteur en l'absence de brouillage. La modulation étant une modulation BPSK; le signal est ici « porté » par la phase de la sous-porteuse. Comme expliqué plus haut, la phase $\Phi_0$ correspond à un « 1 » et la phase $\Phi_0$+180° correspond à un « 0 »

La partie c représente le bruit généré par le circuit de modulation 31 piloté par le générateur 32 de signal aléatoire.

Enfin la partie d représente le courant dans l'antenne 3 en présence du bruit et du signal utile.

Pour le tracé en simulation des graphiques de la figure 7, la variance de l'indice de modulation du bruit généré était de $(10\%)^2$ alors que l'indice de modulation du signal reçu sans bruit est d'environ 1%. La distance carte portant l'émetteur 10-lecteur 1 simulée était d'environ 4 cm. Le rapport signal à bruit était donc de -20 dB ce qui correspond à un taux d'erreurs de bits d'environ 45%.

Le champ électro-magnétique présent au niveau de l'antenne 3 est la résultante dés champs créés par le lecteur 1 et la carte 10. Le champ de bruit créé par le lecteur 1 est beaucoup plus intense que celui créé par le signal utile de la carte 1. Dans le champ résultant, le signal utile portant les données à transmettre est masqué par le signal de bruit.

Il faut noter toutefois qu'en se plaçant à une distance très faible de la carte par rapport à la distance entre le lecteur et la carte, le champ créé par la carte est prépondérant. Mais de par sa nature, la carte est en mouvement lors de son utilisation et peut se trouver n'importe où dans le volume de fonctionnement du lecteur 1. De ce fait la mise en place d'un dispositif espion qui serait beaucoup plus proche de la carte que du lecteur est de fait rendue impossible.

Pour la soustraction du bruit b' au signal combiné de bruit et de signal utile s' + b' la forme du bruit généré permet de se dispenser d'estimer le filtre $H_2$ décrit précédemment. Sur une durée d'un bit, le bruit est proportionnel au signal suivant :

$$b_0(t) = c(t + \tau).\cos(2\pi f t + \phi)$$

où c(t) est un signal carré variant de +1 à -1 périodique de période $1/f_s$. La constante $\tau$ dépend de l'instant initial. On a donc:

$$b(t) = K b_0(t)$$

où K est un nombre aléatoire de densité de probabilité uniforme entre -a et a. Par exemple si la porteuse a une amplitude non modulée de 1 V, alors pour avoir un indice de modulation de 20%, on choisit a = 0,2 V.

Le nombre K est tiré au sort dans le générateur 32 de signal aléatoire pour chaque bit envoyé par l'émetteur 10 de la carte et est connu du lecteur et seulement de lui, puisqu'il le reçoit au niveau des moyens 33.

La valeur moyenne de l'amplitude du signal de bruit envoyé par le lecteur 1 est constante au cours du temps car la valeur moyenne du décalage d'amplitude induite par le bruit est nulle. L'influence de ce bruit sur les paramètres de régulation de la tension de la carte 10 pour la télé alimentation peut donc, en première approximation, être négligée. Dans ce cas, le système est linéaire.

Ainsi, par linéarité du système, à son retour sur le lecteur, le bruit est devenu :

$$b'(t) = K b_0'(t)$$

Donc la connaissance de $b_0'(t)$ suffit pour réussir à soustraire le bruit.

Le récepteur numérise le signal avec une fréquence d'échantillonnage $f_e$. La séquence d'initialisation suivante permet d'enregistrer le bruit de référence :

- Pas de bruit pendant au moins un bit (K = 0) et on enregistre le signal.

- K = Ko pendant au moins un bit et l'émetteur 10 de la carte envoie le même bit qu'à l'étape précédente. On réalise la soustraction de ce signal reçu par celui de l'étape précédente et on divise le tout par $K_0$. On obtient ainsi le bruit de référence qui est mémorisé.

Cette séquence peut être réalisée pendant le temps TR1 décrit précédemment.

Ensuite, le lecteur connaissant K, la soustraction du bruit se fait par exemple par inversion de phase du signal de bruit, multiplication par K et addition au signal combiné. Cette méthode a l'avantage d'avoir un nombre limité d'opérations à effectuer.

La figure 8 représente des chronogrammes des différents signaux présents lors du traitement du signal combiné bruit plus signal utile. Elle comporte les parties a à e.

En partie a est représenté le signal utile tel qu'émis par la carte 10,

En partie b est représenté le courant présent dans l'antenne 3 du lecteur 1 en l'absence de bruit émis par le récepteur 1,

En partie c est représenté le courant présent dans l'antenne 3 du lecteur 1 en présence de bruit émis par le récepteur 1,

En partie d est représenté le signal présent dans les moyens 33 de traitement du signal de l'antenne 3 après soustraction du bruit,

En partie e est représenté le signal de différence entre le signal non bruité représenté en partie b et le signal débruité, c'est-à-dire dont le bruit a été soustrait représenté en partie d.

Sur la figure 8 on peut comparer le signal sans bruit représenté en partie b avec celui bruité auquel on a soustrait le bruit représenté en partie d. Cette différence est représentée en partie e. La fréquence d'échantillonnage utilisée est de $4xf_c$. On remarque qu'au début de chaque bit la différence est assez importante mais se réduit très rapidement. Cette différence est due aux interfaces entre les couples (bit; bruit) successifs (temps de réponse global du système). Lorsque le niveau est stabilisé, c'est-à-dire très peu de temps après le début du bit, le bruit résiduel a une amplitude telle que l'indice de modulation qu'il induit est inférieur à 0,1%. Cela se traduit par le fait que sur la courbe e, le signal de différence a en début de chaque bit une amplitude relativement importante qui est ramenée quasiment à 0 après environ 1/5 de la durée d'un bit.

Au cours d'une communication, avec le mouvement de la carte 10 par rapport au lecteur 1, le bruit de référence peut évoluer et il faut donc adapter l'enregistrement. Le protocole décrit dans la norme ISO 14443 prévoit que chaque octet est entouré d'un bit à O et d'un bit à 1. On peut utiliser ces bits connus pour mettre à jour le bruit de référence enregistré.

**Revendications**

1. Procédé de communication sécurisé entre un émetteur (10) et un récepteur (1), dans lequel une gamme de niveaux de puissance émise par l'émetteur (10), une bande de fréquences à l'intérieur de laquelle l'émission a lieu, sont connus ou détectables par le récepteur (1), le procédé comportant

   - l'émission par le récepteur (1) d'un signal d'alimentation de l'émetteur,
   - l'émission par l'émetteur d'un signal de données utiles par modulation d'un paramètre d'une fréquence porteuse dudit signal de données utiles,

   dans lequel

   le récepteur (1) émet un signal de bruit indépendant des données émises, ayant une bande spectrale qui recouvre la bande de fréquences à l'intérieur de laquelle l'émission a lieu, et ayant une puissance d'un niveau tel que le rapport entre le niveau de la puissance du signal de données émis par l'émetteur (10) et le niveau de la puissance émise par le récepteur (1) est supérieur à une valeur prédéterminée,

   **caractérisé en ce que**

   le récepteur (1) soustrait du signal reçu, le signal de bruit pour obtenir le signal de données utile émis et **en ce que** le signal de bruit est émis pendant au moins toute la durée de l'émission du signal de données utiles provenant de l'émetteur (10).

2. Procédé de communication sécurisé entre un émetteur (10) et un récepteur (1) selon la revendication 1, **caractérisé en ce que** le signal de bruit émis par le récepteur (1) est obtenu par une modulation aléatoire du signal d'alimentation de l'émetteur (10) par le récepteur (1), modulation appliquée au même paramètre que celui utilisé pour le signal d'émission.

**3.** Procédé de communication sécurisé entre un émetteur (10) et un récepteur (1) selon la revendication 2, **caractérisé en ce que** le signal d'émission est un signal numérique de période de bit connue au préalable et **en ce que** un tirage aléatoire de la valeur du paramètre sur lequel la modulation de bruit est appliquée se fait de façon synchrone avec le signal émis.

**4.** Procédé de communication sécurisé entre un émetteur (10) et un récepteur (1) selon la revendications 3, **caractérisé en ce que** la modulation du paramètre sur lequel la modulation de bruit est appliquée suit une loi gaussienne ou une loi uniforme de moyenne nulle.

**5.** Procédé de communication sécurisé entre un émetteur (10) et un récepteur (1) selon l'une des revendications 1 à 4, **caractérisé en ce que** le niveau de bruit est déterminé en fonction d'une valeur prédéterminée pour obtenir en l'absence d'une connaissance du signal de bruit émis par le récepteur (1) un taux d'erreur sur bit supérieur à une valeur prédéterminée.

**6.** Procédé de communication sécurisé entre un émetteur (10) et un récepteur (1) selon l'une des revendications 3 à 5, dans lequel le signal d'émission de l'émetteur (10) comporte au moins une émission d'un bit de valeur connue à un instant connu du récepteur (1) et de bits de valeur inconnue aux autres instants d'émission, **caractérisée en ce que**
les instants connus d'émission d'un bit de valeur connue sont utilisées pour évaluer des déformations des signaux au cours de l'émission réception, ces déformations évaluées étant utilisées pendant les autres instants pour calculer un signal de bruit réel qui devient le signal de bruit qui est soustrait du signal reçu par le récepteur.

**7.** Lecteur (1) de carte (10) à puce comportant des moyens (2) de génération d'un signal d'alimentation d'un émetteur (10) de la carte, un volume de réception de carte permettant un couplage entre des circuits (11-13) portés par la carte (10) et des moyens (3) d'émission/réception du lecteur (1) couplés aux moyens (2) de génération du signal d'alimentation, dans lequel le récepteur (1) comporte :

des moyens (31) de modulation du signal d'alimentation, modulant le signal d'alimentation,
un générateur (32) de signal aléatoire couplé auxdits moyens (31) de modulation du signal d'alimentation,
des moyens (33) de traitement du signal reçu par le récepteur (1), ces moyens (33) étant couplés au générateur (32) de signal aléatoire, aux moyens (3) d'émission/réception, et aux moyens (31) de modulation, **caractérisé en ce que** ces moyens (33) de traitement du signal reçu par le récepteur (1) séparant le signal présent sur les moyens (3) d'émission/réception et le signal de modulation, pour retrouver un signal utile émis par l'émetteur (10) de la carte.

**Claims**

**1.** Method for secured communication between a transmitter (10) and a receiver (1) wherein a range of power levels transmitted by the transmitter (10), a band of frequencies inside which the transmission occurs, are known or detectable by the receiver (1), the method including

- transmission by the receiver (1) of a signal for powering the transmitter,
- transmission by the transmitter of a useful data signal by modulating a parameter of a carrier frequency of said useful data signal,

wherein the receiver (1) transmits a noise signal independent of the transmitted data, having a spectral band which covers the frequency band inside which transmission occurs, and having a power level such that the ratio between the power level of the data signal transmitted by the transmitter (10) and the power level transmitted by the receiver (1) is larger than a predetermined value, **characterized in that** the receiver (1) subtracts from the received signal, the noise signal in order to obtain the transmitted useful data signal and **in that** the noise signal is transmitted at least throughout the transmission time of the useful data signal from the transmitter (10).

**2.** Method for secured communication between a transmitter (10) and a receiver (1) according to claim 1, **characterized in that** the noise signal transmitted by the receiver (1) is obtained by random modulation of the signal for supplying power to the transmitter (10) by the receiver (1), a modulation applied to the same parameter as the one used for the transmission signal.

**3.** Method for secured communication between a transmitter (10) and a receiver (1) according to claim 2, **characterized in that** the transmission signal is a digital signal, with a bit period known beforehand and **in that** random drawing of the value of the parameter on which the noise modulation is applied, is performed synchronously with the transmitted signal.

**4.** Method for secured communication between a transmitter (10) and a receiver (1) according to claim 3, **characterized in that** the modulation of the parameter on which the noise modulation is applied, follows a Gaussian law or a uniform law with zero mean.

**5.** Method for secured communication between a transmitter (10) and a receiver (1) according to any of claims 1 to 4, **characterized in that** the noise level is determined according to a predetermined value in order to obtain in the absence of knowledge on the noise signal transmitted by the receiver (1), a bit error rate larger than a predetermined value.

**6.** Method for secured communication between a transmitter (10) and a receiver (1) according to any of claims 3 to 5, wherein the transmission signal of the transmitter (10) includes at least one transmission of a bit of known value at an instant known to the receiver (1) and of bits of unknown value at the other instants of transmission, **characterized in that** the known instants of transmission of a bit with a known value are used for evaluating distortions of the signals during transmission/reception, these evaluated distortions being used during the other instants for calculating a real noise signal which becomes the noise signal which is subtracted from the signal received by the receiver.

**7.** Reader (1) of a chip card (10) including means (2) for generating a signal for powering a transmitter (10) of the card, a space for receiving a card providing coupling between circuits (11-13) borne by the card (10) and transmission/reception means (3) of the reader (1) coupled with means (2) for generating the power supply signal, wherein the receiver (1) includes means (31) for modulating the power supply signal, which modulate the power supply signal, a random signal generator (32) coupled with said means (31) for modulating the power supply signal,
means (33) for processing the signal received by the receiver (1), these means (33) being coupled with the random signal generator (32), with the transmission/reception means (3) and with the modulation means (31), **characterized in that** said means (33) for processing the received signal by the receiver (1) separating the signal present on the transmission/reception means (3) and the modulation signal, in order to recover a useful signal transmitted by the transmitter (10) of the card.

**Patentansprüche**

**1.** Gesichertes Kommunikationsverfahren zwischen einem Sender (10) und einem Empfänger (1), bei dem ein Pegelbereich der durch den Sender (10) abgestrahlten Leistung und ein Frequenzband, innerhalb dem die Abstrahiung stattfindet, bekannt oder detektierbar sind durch den Empfänger (1), wobei das Verfahren umfasst:

- das Senden eines Senderspeisungssignals durch den Empfänger (1),
- Das Senden eines Nutzdatensignals mittels Modulation eines Parameters einer Trägerfrequenz des genannten Nutzdatensignals durch den Sender,

bei dem der Sender (1) ein von den gesendeten Daten unabhängiges Rauschsignal sendet, mit einem Spektralband, welches das Frequenzband abdeckt, innerhalb dem die Sendung stattfindet, und einem solchen Leistungspegel, dass das Verhältnis aus Leistungspegel des durch den Sender (10) abgestrahlten Signals zu Leistungspegel des durch den Empfänger (1) abgestrahlten Signals größer ist als ein vorherbestimmter Wert,
**dadurch gekennzeichnet,**
**dass** der Empfänger (1) das gesendete Nutzdatensignal erhält, indem er das Rauschsignal von dem empfangenen Signal abzieht,
und **dadurch**, dass das Rauschsignal während wenigstens der gesamten Sendedauer des von dem Sender (10) stammenden Nutzdatensignals gesendet wird.

**2.** Gesichertes Kommunikationsverfahren zwischen einem Sender (10) und einem Empfänger (1) nach Anspruch 1, **dadurch gekennzeichnet, dass** das durch den Empfänger (1) gesendete Rauschsignal durch eine Zufallsmodulation des Speisungssignals des Senders (10) durch den Empfänger (1) erzeugt wird, wobei diese Modulation auf denselben Parameter wie dem für das Sendesignal benutzten angewandt wird.

**3.** Gesichertes Kommunikationsverfahren zwischen einem Sender (10) und einem Empfänger (1) nach Anspruch 2, **dadurch gekennzeichnet, dass** das Sendesignal ein digitales Signal mit im Voraus bekannter Bitperiode ist, und **dadurch**, dass eine Zufallsziehung des Werts des Parameters, auf den die Rauschmodulation angewandt wird, synchron mit dem gesendeten Signal erfolgt.

**4.** Gesichertes Kommunikationsverfahren zwischen einem Sender (10) und einem Empfänger (1) nach Anspruch 3, **dadurch gekennzeichnet, dass** die Modulation des Parameters, auf den die Rauschmodulation angewandt wird, einem gaußschen Gesetz oder einem einheitlichen oder Einheits-Nullmittelgesetz (loi uniforme de moyenne nulle) folgt.

**5.** Gesichertes Kommunikationsverfahren zwischen einem Sender (10) und einem Empfänger (1) nach einem der Ansprüche 1 bis 4, **dadurch gekennzeichnet, dass** der Rauschpegel bestimmt wird in Abhängigkeit von einem vorbestimmten Wert um ohne Kenntnis des durch den Empfänger (1) abgestrahlten Rauschsignals eine Bitfehlerrate zu erhalten, die höher ist als ein vorbestimmter Wert.

**6.** Gesichertes Kommunikationsverfahren zwischen einem Sender (10) und einem Empfänger (1) nach einem der Ansprüche 3 bis 5, bei dem das Sendesignal des Senders (10) wenigstens eine Aussendung eines Bits von bekanntem Wert zu einem dem Empfänger (1) bekannten Zeitpunkt und von Bits mit unbekanntem Wert zu den anderen Sendezeitpunkten umfasst,
**dadurch gekennzeichnet, dass** die bekannten Sendezeitpunkte eines Bits von bekanntem Wert benutzt werden, um Verformungen der Signale im Sende-Empfangsverlauf zu bewerten, wobei diese bewerteten Verformungen während der anderen Zeitpunkte benutzt werden, um ein reales Rauschsignal zu berechnen, welches das Rauschsignal wird, das von dem durch den Empfänger empfangenen Signal abgezogen wird.

**7.** Lesevorrichtung oder Empfänger (1) für Chipkarte (10) mit Erzeugungseinrichtungen (2) eines Speisungssignals eines Senders (10) der Karte, wobei ein Kartenaufnahmevolumen eine Kopplung zwischen Kreisen (11-13) der Karte (10) und Sende-Empfangseinrichtungen (3) des Lesers (1), gekoppelt mit den Speisungssignal-Erzeugungseinrichtungen (2), ermöglicht, umfassend:

Speisungssignal-Modulationseinrichtungen (31), um das Speisungssignal zu modulieren,
einen Zufallssignalgenerator (32), gekoppelt mit den genannten Speisungssignal-Modulationseinrichtungen (31),
Verarbeitungseinrichtungen (33) des durch den Empfänger (1) empfangenen Signals, wobei diese Einrichtungen (33) mit dem Zufallsignalgenerator (32), den Sende-Empfangseinrichtungen (3) und den Modulationseinrichtungen (31) gekoppelt sind,

**dadurch gekennzeichnet, dass** diese Verarbeitungseinrichtungen (33) des durch den Empfänger (1) empfangenen Signals das in den Sende-Empfangseinrichtungen (3) präsente Signal und das Modulationssignal trennen, um ein durch den Sender (10) der Karte gesendetes Nutzsignal wiederzufinden bzw. wiederherzustellen.

# FIG. 1

# FIG. 2

FIG. 3

FIG. 4

FIG. 5

FIG. 6

FIG. 7a

FIG. 7b

FIG. 7c

FIG. 7d

FIG. 8a

FIG. 8b

FIG. 8c

FIG. 8d

FIG. 8e

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2776865
- US 5955969 A